(19) Europäisches Patentamt / European Patent Office / Office européen des brevets

(11) **EP 3 353 885 B1**

(12) **EUROPÄISCHE PATENTSCHRIFT**

(45) Veröffentlichungstag und Bekanntmachung des Hinweises auf die Patenterteilung:
**28.04.2021   Patentblatt 2021/17**

(21) Anmeldenummer: **16770497.2**

(22) Anmeldetag: **23.09.2016**

(51) Int Cl.:
*H02M 7/483* (2007.01)     *H02M 7/49* (2007.01)
*H02M 7/48* (2007.01)     *H02M 1/00* (2006.01)

(86) Internationale Anmeldenummer:
**PCT/EP2016/072673**

(87) Internationale Veröffentlichungsnummer:
**WO 2017/050960 (30.03.2017 Gazette 2017/13)**

(54) **VERFAHREN ZUM BETRIEB EINES MODULAREN MULTILEVEL-STROMRICHTERS, MODULARER MULTILEVEL-STROMRICHTER SOWIE COMPUTERPROGRAMM**

METHOD FOR OPERATING A MODULAR MULTI-LEVEL POWER CONVERTER, MODULAR MULTI-LEVEL POWER CONVERTER, AND COMPUTER PROGRAM

PROCÉDÉ DE FONCTIONNEMENT D'UN CONVERTISSEUR DE COURANT MODULAIRE À MULTIPLES NIVEAUX, CONVERTISSEUR DE COURANT MODULAIRE À MULTIPLES NIVEAUX AINSI QUE PROGRAMME D'ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2015   DE 102015116271**

(43) Veröffentlichungstag der Anmeldung:
**01.08.2018   Patentblatt 2018/31**

(73) Patentinhaber: **Gottfried Wilhelm Leibniz Universität Hannover**
**30167 Hannover (DE)**

(72) Erfinder: **MERTENS, Axel**
**30800 Wedemark/OT Bissendorf (DE)**

(74) Vertreter: **Gramm, Lins & Partner Patent- und Rechtsanwälte PartGmbB Freundallee 13a 30173 Hannover (DE)**

(56) Entgegenhaltungen:
**DE-A1-102008 014 898**

- LIAO WU ET AL: "A simplified method for controlling the Modular Multi-level Converter energy based on modified Carrier Phase-Shift Modulation", 2014 17TH INTERNATIONAL CONFERENCE ON ELECTRICAL MACHINES AND SYSTEMS (ICEMS), IEEE, 22. Oktober 2014 (2014-10-22), Seiten 2454-2459, XP032723368, DOI: 10.1109/ICEMS.2014.7013918 [gefunden am 2015-01-16]
- SOONG THEODORE ET AL: "Internal Power Flow of a Modular Multilevel Converter With Distributed Energy Resources", IEEE JOURNAL OF EMERGING AND SELECTED TOPICS IN POWER ELECTRONICS, IEEE, PISCATAWAY, NJ, USA, Bd. 2, Nr. 4, 1. Dezember 2014 (2014-12-01), Seiten 1127-1138, XP011562906, ISSN: 2168-6777, DOI: 10.1109/JESTPE.2014.2342656 [gefunden am 2014-10-29]

EP 3 353 885 B1

**Beschreibung**

Die Erfindung betrifft ein Verfahren zum Betrieb eines modularen Multilevel-Stromrichters, der mehrere Stromrichterzweige aufweist, in denen jeweils Reihenschaltungen von Brückenmodulen angeordnet sind, wobei die Brückenmodule jeweils eine Brückenschaltung in Form einer Halbbrücke oder einer Vollbrücke aus Leistungshalbleitern und wenigstens einen über die Brückenschaltung schaltbaren Kondensator aufweisen, wobei durch das Verfahren an einer Ausgangsseite des Stromrichters eine Ausgangs-Wechselspannung bereitgestellt wird. Die Erfindung betrifft ferner einen in dieser Art ausgebildeten modularen Multilevel-Stromrichter sowie ein Computerprogramm mit Programmcodemitteln, eingerichtet zur Durchführung eines Verfahrens der zuvor genannten Art.

Allgemein liegt die Erfindung auf dem Gebiet der Leistungselektronik und insbesondere der Stromrichtertechnik. Eine Klasse von Stromrichtern mit einer Eignung für besonders hohe Spannungen unter Verwendung handelsüblicher Leistungshalbleiter stellt die Klasse der modularen Multilevel-Stromrichter dar. Das Prinzip besteht darin, Module aus einer Halbbrücke oder einer Vollbrücke von schaltbaren Leistungshalbleitern und einem in der Regel relativ groß dimensionierten Kondensator zu verwenden. Die erforderliche Sperrspannung der Leistungshalbleiter ist durch die maximal auftretende Betriebsspannung des Kondensators definiert. Die Module, auch Brückenmodule genannt, werden ausgangsseitig in Serie geschaltet. An jedem Modulausgang kann die jeweilige Kondensatorspannung des Brückenmoduls oder ein Kurzschluss geschaltet werden, bei Vollbrückenmodulen auch die negative Kondensatorspannung. Beim Betrieb der Brückenmodule entsteht eine pulsierende Leistung, deren zeitliches Integral (nachfolgend auch Energievariation oder Energieschwankung genannt) zu einer bedeutenden Spannungsänderung am Kondensator des Brückenmoduls führt. Damit die Energieschwankung nicht zu einer Überschreitung der zulässigen Betriebsspannung des Kondensators führt, muss dieser vergleichsweise groß dimensioniert sein. Bekannte modulare Multilevel-Stromrichter benötigen daher relativ große Kapazitäten in den Brückenmodulen, was zu großem Bauvolumen, Gewicht und Kosten des Stromrichters führt.

Modulare Multilevel-Stromrichter und deren Betrieb sind beispielsweise in den Veröffentlichungen "Low output frequency operation of the modular multi-level converter" in 2010 IEEE Energy Conversion Congress and Exposition (ECCE), Sept 2010, pp. 3993-3997, "Direct modular multi-level converter for gearless low-speed drives" in Proceedings of the 2011-14th European Conference on Power Electronics and Applications (EPE 2011), Aug 2011, pp. 1-7, "Control of the modular multilevel cascade converter based on triple-star bridge-cells (mmcc-tsbc) for motor drives" in 2012 IEEE Energy Conversion Congress and Exposition (ECCE), Sept. 2012, pp. 3506-3513, "The Multilevel Modular DC Converter" in IEEE TRANSACTIONS ON POWER ELECTRONICS, VOL. 28, NO. 10, OCTOBER 2013, "Energy balancing of the modular multilevel matrix converter based on a new transformed arm power analysis" in 2014 16th European Conference on Power Electronics and Applications (EPE'14-ECCE Europe), Aug 2014, pp. 1-10 und "Quasi Two-Level Operation of Modular Multi-level Converter for Use in a High-Power DC Transformer With DC Fault Isolation Capability" in IEEE TRANSACTIONS ON POWER ELECTRONICS, VOL. 30, NO. 1, JANUARY 2015 beschrieben

Das Dokument DE 10 2008 014898 A1 zeigt einen Stromrichter mit Stromrichterzweige und Brückenmodulen.

Das Dokument "A simplified method for controlling the Modular Multi level Converter energy based on modified Carrier Phase-Shift Modulation", XP032723368, Liao Wu et AI, zeigt ein einfaches Modell zur Stabilisierung der Kondensatorspannung in einem mehrstufigen Stromrichter. Energie wird zu einem Submodul in einen "Oberarm" und zu einem Submodul in einen "Unterarm" mit einer hohen Schaltfrequenz verteilt. Die im Oberarm und Unterarm gespeicherte Energie bleibt stabil.

Das Dokument "Internal Power Flow of a Modular Multilevel Converter With Distributed Energy Resources", XP011562906, Soong Theodore et AI, zeigt einen modularen mehrstufigen Stromrichter, bei dem jeder Phasenabschnitt aus zwei in Reihe geschalteten Teilmodulketten besteht, wobei jede Teilmodulkette als Phasenarm bezeichnet wird. Basierend auf analytisch entwickelten Leistungsflussbeziehungen zwischen den Armen wird ein Steuerverfahren vorgeschlagen, mit dem der tatsächliche Leistungsfluss jedes Arms vollständig unabhängig gesteuert werden kann.

Der Erfindung liegt die Aufgabe zugrunde, Möglichkeiten zur Reduzierung der Kapazitäten in den Brückenmodulen solcher Stromrichter anzugeben.

Diese Aufgabe wird gelöst durch ein Verfahren zum Betrieb eines modularen Multilevel-Stromrichters, der mehrere Stromrichterzweige aufweist, in denen jeweils Reihenschaltungen von Brückenmodulen angeordnet sind, wobei die Brückenmodule jeweils eine Brückenschaltung in Form einer Halbbrücke oder einer Vollbrücke aus Leistungshalbleitern und wenigstens einen über die Brückenschaltung schaltbaren Kondensator aufweisen, wobei durch das Verfahren an einer Ausgangsseite des Stromrichters eine Ausgangs-Wechselspannung mit einer Ausgangsfrequenz bereitgestellt wird, dadurch gekennzeichnet, dass der gewünschte zeitliche Amplitudenverlauf der Ausgangs-Wechselspannung des Stromrichters mittels Zweipunktregelung, bei der immer alle in Reihe geschalteten Brückenmodule eines jeweiligen Stromrichterzweigs zugeschaltet und wieder abgeschaltet werden, durch eine durch die Brückenmodule von einem oder mehreren Stromrichterzweigen erzeugte Modulations-Wechselspannung mit einer Modulationsfrequenz synthetisiert wird, die höher ist als die Ausgangsfrequenz, wobei die Modulations- Wechselspannung im Takt der Modulationsfrequenz die Ausgangs-Wechselspannung wechselnd über- und unterschreitet, und durch jeweils einen einem Stromrichterzweig zugeordneten Energieregler die Schaltzeitpunkte der Leistungshalbleiter der Brückenmodule dieses Stromrichterzweigs mit dem Regelziel einer Minimierung der Energievariation des Stromrichterzweigs durch Erzeugung und Regelung eines Kreisstroms im Stromrichter geregelt werden.

Die Erfindung hat den Vorteil, dass durch Einführung einer anderen Betriebsart der Brückenmodule bzw. einer anderen Art des Schaltens von deren Leistungshalbleitern in Kombination mit einer Energieregelung zur Minimierung der Energievariation des Stromrichters die Energieschwankung drastisch minimiert werden kann. Untersuchungen haben gezeigt, dass die Energieschwankung derart verringert wird, dass die notwendigen Kapazitäten in den Brückenmodulen um den Faktor 20 bis 200 verringert werden können. Damit lässt sich eine erheblich Einsparung an Bauvolumen, Gewicht und Kosten eines Stromrichters erzielen. Ein weiterer Vorteil ist, dass mit dem erfindungsgemäßen Verfahren modulare Multilevel-Stromrichter ermöglicht werden, die kompakt und aufwandsarm sind und keine besonderen Anforderungen an die Art und Weise des Aufbaus oder die Betriebsmittel stellen.

Durch die vorgeschlagenen Maßnahmen kann noch ein zusätzlicher Vorteil erzielt werden, nämlich eine geringere Belastung der Leistungshalbleiter. Bei bekannten Betriebsverfahren von modularen Multilevel-Stromrichtern sind alle Leistungshalbleiter in den Brückenmodulen für bedeutende Zeitabschnitte mit dem vollen Zweigstrom eines Stromrichterzweigs belastet. Daher müssen auch alle Leistungshalbleiter entsprechend groß dimensioniert sein. Mit dem erfindungsgemäßen Verfahren wird es möglich, die Leistungshalbleiter in einem Brückenmodul unsymmetrisch zu dimensionieren, d.h. einzelne Leistungshalbleiter kleiner als bisher zu dimensionieren. Auch hierdurch kann Halbleiterfläche und damit verbundene Kosten eingespart werden.

Ein weiterer Vorteil der Erfindung liegt darin, dass die Modulations-Wechselspannung hinsichtlich ihrer Kurvenform so gewählt werden kann, dass keine negativen Auswirkungen hinsichtlich elektromagnetischer Verträglichkeit oder Probleme der Isolation an angeschlossenen Betriebsmitteln auftreten, wie dies bei direkt seriengeschalteten Leistungshalbleitern der Fall wäre. Vielmehr erlaubt es das erfindungsgemäße Verfahren, die Modulations-Wechselspannung nicht exakt rechteckförmig zu erzeugen, sondern ein zeitlich zueinander versetztes Einschalten der Brückenmodule während eines Anstiegs der Amplitude der Modulations-Wechselspannung bzw. zeitlich zueinander versetztes Ausschalten der Brückenmodule bei einem Abfall der Amplitude der Modulations-Wechselspannung durchzuführen. Auf diese Weise kann z.B. ein steilflankig trapezförmiger oder treppenförmiger Verlauf der Modulations-Wechselspannung erzeugt werden.

So kann insbesondere die Flankensteilheit der Modulations-Wechselspannung durch entsprechenden Zeitversatz des Schaltens der Brückenmodule eines Stromrichterzweigs nach Bedarf gewählt werden und ggf. auch variabel gehalten werden, so dass je nach Betriebssituation der Stromrichter auch mit unterschiedlichen Flankensteilheiten betrieben werden kann.

Im Ergebnis wird bei dem erfindungsgemäßen Verfahren eine Ausgangs-Wechselspannung erzeugt, die auch Anteile aufweist, die vom exakten gewünschten zeitlichen Amplitudenverlauf abweichen und somit nicht dem Sollwert entsprechen und keine Common-Mode-Größen sind. Die in den Stromrichterzweigen erzeugten Zweigspannungen enthalten dann zusätzliche Frequenzanteile. Mit Kreisströmen derselben Frequenzanteile kann es dann erreicht werden, dass die Energieschwankung in den Stromrichterzweigen und damit in den Brückenmodulen minimiert wird und im Ergebnis nur kleine Kapazitäten erforderlich sind.

Bei dem erfindungsgemäßen Verfahren werden somit in den Ausgangs- bzw. Lastspannungen auch differenzielle Spannungsanteile zugelassen, die von den eigentlichen Sollwerten abweichen. Durch Eigenschaften der an die Ausgangs-Wechselspannung angeschlossenen Lasten oder durch zusätzliche Filter können diese zusätzlichen Modulations-Frequenzanteile der Lastspannung hinreichend unterdrückt werden, so dass die Lastströme nur geringe Anteile der Modulations-Wechselspannung bzw. von dessen Modulationsfrequenz enthalten.

Hierzu können die Stromrichterzweige durch entsprechende Betätigung der Leistungshalbleiter so moduliert werden, dass ihre Leistung stets im Wesentlichen den Wert Null ergibt, außer während der Anstiegs- und/oder Abfallzeiten (Flanken) der Modulations-Wechselspannung. Hierdurch können auch die Leistungshalbleiter kleiner dimensioniert werden.

Der Stromrichter kann zum Beispiel als einphasiger oder mehrphasiger Wechselrichter ausgebildet sein (DC/AC-Wandler). Insbesondere kann hierdurch dreiphasiger Wechselstrom im Sinne von Drehstrom erzeugt werden.

Gemäß einer vorteilhaften Weiterbildung der Erfindung wird ein Ausgleich des Energieinhalts in einem Stromrichterzweig innerhalb einer Periode der Modulations-Wechselspannung durch Erzeugung eines Kreisstroms im Stromrichter durchgeführt. Der Kreisstrom wird mit der Modulationsfrequenz erzeugt.

Der Kreisstrom kann dabei aktiv durch einen Kreisstromregler erzeugt werden, er stellt sich somit nicht lediglich passiv ein.

Gemäß einer vorteilhaften Weiterbildung der Erfindung kann die Modulationsfrequenz der Modulations-Wechselspannung unabhängig von der Ausgangsfrequenz sein, d.h. die Frequenzen können unabhängig voneinander festgelegt werden. Dies erlaubt große Freiheiten bei der Wahl der Modulationsfrequenz, da die Ausgangsfrequenz durch das angeschlossene Energieversorgungsnetz in der Regel festgelegt ist, z.B. auf 50 Hz.

Die Erfindung hat außerdem ein großes Potential bei der elektrischen Versorgung von Antrieben, d.h. von elektrischen Maschinen. In solchen Anwendungsfällen kann die gewünschte Ausgangsfrequenz variabel sein, z.B. im Bereich von 0 bis 100 Hz. Die Erfindung erlaubt es, bei solchen Anwendungsfällen eine feste Modulationsfrequenz der Modulations-Wechselspannung zu verwenden.

Gemäß einer vorteilhaften Weiterbildung der Erfindung wird der gewünschte zeitliche Amplitudenverlauf der Ausgangs-Wechselspannung des Stromrichters durch Pulsdauermodulation der Modulations-Wechselspannung erzeugt (auch PWM-Modulation genannt). Dies ermöglicht neue Freiheitsgrade beim Betrieb von modularen Multilevel-Stromrichtern. So kann durch die Pulsdauermodulation der gewünschte zeitliche Amplitudenverlauf der Ausgangs-Wechselspannung gut angenähert werden, ohne unerwünschte Nachteile hinsichtlich elektromagnetischer Verträglichkeit oder der Isolation hinnehmen zu müssen.

Gemäß einer vorteilhaften Weiterbildung der Erfindung wird der Ausgangsstrom des Stromrichters unabhängig vom Eingangs- bzw. Zweigstrom oder Kreisstrom gesteuert und/oder geregelt. Hierzu kann eine überlagerte Stromregelung in einer Steuerungseinrichtung des Stromrichters vorhanden sein, die überlagert zur Erzeugung der Modulations-Wechselspannung die Stromsteuerung oder -regelung durchführt.

Die eingangs genannte Aufgabe wird außerdem gelöst durch einen modularen Multilevel-Stromrichter, der mehrere Stromrichterzweige aufweist, in denen jeweils Reihenschaltungen von Brückenmodulen angeordnet sind, wobei die Brückenmodule jeweils eine Brückenschaltung in Form einer Halbbrücke oder einer Vollbrücke aus Leistungshalbleitern und wenigstens einen über die Brückenschaltung schaltbaren Kondensator aufweisen, und mit wenigstens einer Steuerungseinrichtung, die zur Durchführung eines Verfahrens der zuvor genannten Art eingerichtet ist. Auch hierdurch lassen sich die zuvor erläuterten Vorteile realisieren.

Gemäß einer vorteilhaften Weiterbildung der Erfindung weist die Steuerungseinrichtung einen Ausgangsstromregler auf, der zur Regelung des Ausgangsstroms des Stromrichters eingerichtet ist. Ferner kann die Steuerungseinrichtung einen Zweigstrom- oder Kreisstromregler aufweisen, der zur Regelung des Zweigstroms oder zur Regelung eines Kreisstroms im Stromrichter eingerichtet ist. Hierdurch ist die bereits erwähnte unabhängige Steuerung und/oder Regelung des Ausgangsstroms vom Eingangsstrom bzw. Zweigstrom oder Kreisstrom realisierbar. Vorteilhafterweise kann der Zweig- oder Kreisstromregler dem Energieregler nachgeordnet sein, so dass die Regelung des Eingangsstroms Priorität vor der Energieregelung hat. So kann jeder Zweigstrom als Summe oder Differenz von Ausgangsstrom und Kreisstrom gebildet werden. Daher können zwei beliebige der vier Ströme (2 Zweigstöme, Kreis- und Ausgangsstrom) geregelt werden, die anderen bestimmen sich aus dem Zusammenhang.

Die eingangs genannte Aufgabe wird ferner gelöst durch ein Computerprogramm mit Programmcodemitteln, eingerichtet zur Durchführung eines Verfahrens der zuvor erläuterten Art, wenn das Computerprogramm auf einem Rechner ausgeführt wird. Der Rechner kann z.B. ein Mikroprozessor oder Mikrokontroller der Steuerungseinrichtung des Stromrichters sein.

Gegenüber herkömmlichen spannungseinprägenden Stromrichtern erweitert die Erfindung die mögliche Wahl der Modulationsfunktionen für die Erzeugung der Modulations-Wechselspannung in erheblichem Maß. Im Vergleich zu bekannten Vorschlägen für den Betrieb von modularen Multilevel-Stromrichtern entstehen neue Freiheitsgrade, insbesondere durch die Wahl der Art und Form der Modulationsfunktion der Modulations-Wechselspannung und der Kreisströme. Es bietet sich eine Vielfalt von zusätzlichen Möglichkeiten, die je nach Einsatzzweck des Stromrichters angepasst werden können. Die Anpassung kann vorteilhaft durch Anpassung der Steuerungseinrichtung bzw. von dessen Betriebssoftware erfolgen.

Die Erfindung wird nachfolgend anhand von Ausführungsbeispielen unter Verwendung von Zeichnungen näher erläutert:

Es zeigen:

Figur 1          einen modularen Multilevel-Stromrichter und

Figur 2          ein äquivalentes Ersatzschaltbild des Stromrichters gemäß Figur 1 und

Figuren 3 bis 6   Zeitverläufe von elektrischen Ausgangsgrößen des Stromrichters gemäß Figur 1 und

Figur 7          ein Blockschaltbild einer Steuerungseinrichtung des Stromrichters gemäß Figur 1.

In den Figuren werden gleiche Bezugszeichen für einander entsprechende Elemente und Größen verwendet.

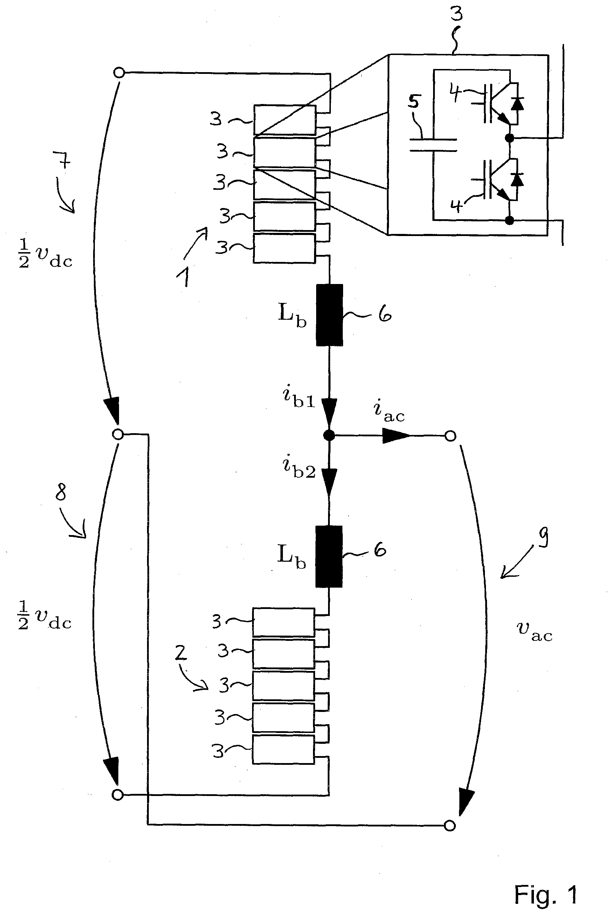

Die in Figur 1 dargestellte Schaltungsanordnung zeigt einen modularen Multilevel-Stromrichter, mit dem aus einer Eingangs-Gleichspannung $v_{dc}$ ausgangsseitig eine Wechselspannung $v_{ac}$ bereitgestellt werden kann. Insofern zeigt die Figur 1 einen einphasigen Stromrichter. Mit drei Schaltungsanordnungen gemäß Figur 1 kann ein dreiphasiger DC/AC-Wandler bereitgestellt werden. Insofern zeigt die Figur 1 zugleich ein Bein eines dreiphasigen modularen Multilevel-Stromrichters.

Der in Figur 1 dargestellte Stromrichter weist zwei Stromrichterzweige 1, 2 auf, die jeweils durch eine Reihenschaltung von Brückenmodulen 3 (hier jeweils fünf Brückenmodule) gebildet sind. Je Stromrichterzweig 1, 2 ist in Reihe zu der Reihenschaltung der Brückenmodule 3 eine Induktivität 6 angeordnet. In der Figur 1 ist rechts oben beispielhaft ein Brückenmodul 3 in vergrößerter Darstellung wiedergegeben. Stellvertretend für die anderen Brückenmodule 3 ist hier der innere Aufbau mit einer Halbbrücke aus zwei Leistungshalbleitern 4 in Form von Halbleiterschaltern, zum Beispiel IGBTs, sowie einem Kondensator 5 dargestellt.

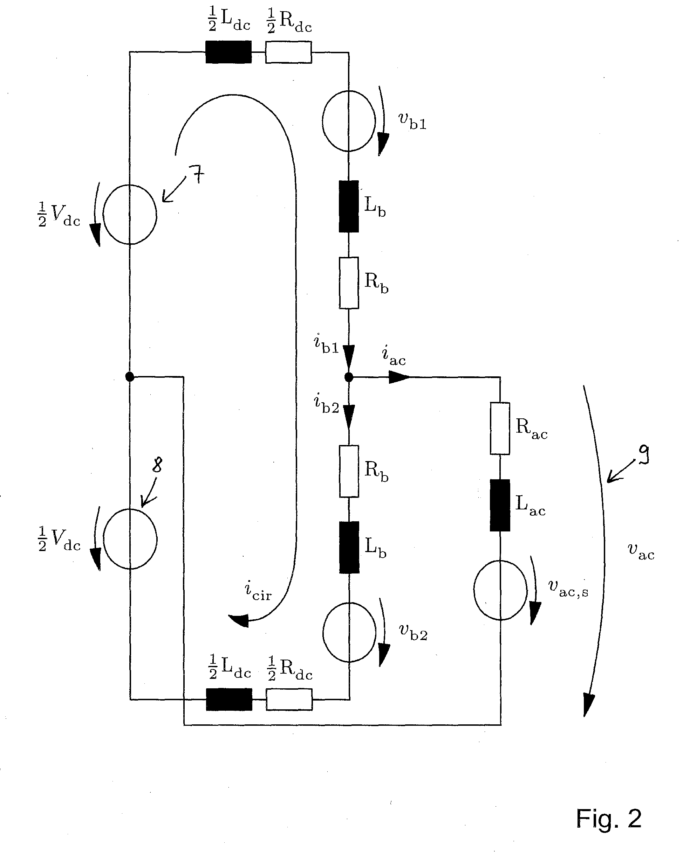

Die Eingangsspannung $v_{dc}$ wird in Form zweier halber Eingangsspannungen 7, 8, das heißt jeweils ½ $v_{dc}$, eingangsseitig dem Stromrichter zugeführt. Durch entsprechende Ansteuerung der Leistungshalbleiter 4 der Brückenmodule 3 wird hierdurch am Ausgang 9 des Stromrichters eine Ausgangs-Wechselspannung $v_{ac}$ sowie bei am Ausgang 9 angeschlossener Last ein Ausgangsstrom $i_{ac}$ bereitgestellt. In den Stromrichterzweigen 1, 2 fließen dabei Zweigströme $i_{b,1}$ und $i_{b,2}$. Die Figur 2 zeigt den Stromrichter gemäß Figur 1 in Form eines elektrischen Ersatzschaltbilds, wobei die Eingangsspannungen 7, 8 in Form von Spannungsquellen mit Innen-Impedanzen dargestellt sind, ebenso die in den Stromrichterzweigen 1, 2 erzeugten Spannungen $v_{b,1}$ und $v_{b,2}$.

Der Kreisstrom $i_{cir}$ ist der Mittelwert der beiden Zweigströme. Dieser setzt sich zusammen aus einem konstanten Gleichstromanteil $\overline{i}_{cir}$ und einem Wechselstromanteil $\tilde{i}_{cir}$ der zum Zweigenergieausgleich in den Stromrichterzweigen 1, 2 dient.

$$i_{\mathrm{cir}} = \frac{1}{2}\left(i_{\mathrm{b1}} + i_{\mathrm{b2}}\right) = \overline{i}_{\mathrm{cir}} + \tilde{i}_{\mathrm{cir}}$$

Der Ausgangsstrom kann ebenfalls als Linearkombination der Ströme in den Stromrichterzweigen 1, 2 ausgedrückt werden:

$$i_{\mathrm{ac}} = i_{\mathrm{b},1} - i_{\mathrm{b},2}$$

Bezüglich des in Figur 2 dargestellten Ersatzschaltbilds kann folgende Zustandsraum-Beschreibung der Schaltungsanordnung aufgestellt werden:

$$\frac{\partial}{\partial t}\begin{bmatrix} i_{\mathrm{ac}} \\ i_{\mathrm{cir}} \end{bmatrix} = \mathbf{A}\cdot\begin{bmatrix} i_{\mathrm{ac}} \\ i_{\mathrm{cir}} \end{bmatrix} + \mathbf{B}\cdot\begin{bmatrix} v_{\mathrm{b1}} \\ v_{\mathrm{b2}} \end{bmatrix} + \mathbf{E}\cdot\begin{bmatrix} v_{\mathrm{ac,s}} \\ v_{\mathrm{dc}} \end{bmatrix}$$

Die Zustandsraum-Matrizen A, B und E sind:

$$\mathbf{A} = \begin{bmatrix} -\dfrac{R_{\mathrm{dc}}+4R_{\mathrm{ac}}+2R_{\mathrm{b}}}{L_{\mathrm{dc}}+4L_{\mathrm{ac}}+2L_{\mathrm{b}}} & 0 \\ 0 & -\dfrac{R_{\mathrm{dc}}+2R_{\mathrm{b}}}{L_{\mathrm{dc}}+2L_{\mathrm{b}}} \end{bmatrix}$$

$$\mathbf{B} = \begin{bmatrix} -\dfrac{2}{L_{\mathrm{dc}}+4L_{\mathrm{ac}}+2L_{\mathrm{b}}} & \dfrac{2}{L_{\mathrm{dc}}+4L_{\mathrm{ac}}+2L_{\mathrm{b}}} \\ -\dfrac{1}{L_{\mathrm{dc}}+2L_{\mathrm{b}}} & -\dfrac{1}{L_{\mathrm{dc}}+2L_{\mathrm{b}}} \end{bmatrix}$$

$$\mathbf{E} = \begin{bmatrix} -\dfrac{4}{L_{\mathrm{dc}}+4L_{\mathrm{ac}}+2L_{\mathrm{b}}} & 0 \\ 0 & \dfrac{1}{L_{\mathrm{dc}}+2L_{\mathrm{b}}} \end{bmatrix}$$

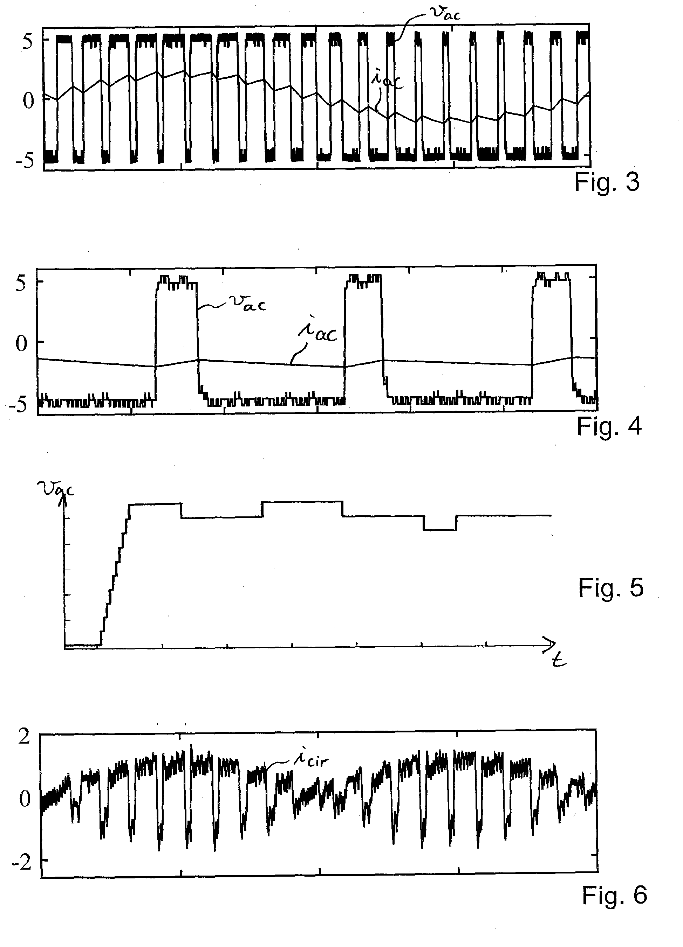

Um das erfindungsgemäße Verfahren zum Betrieb des Stromrichters gemäß den Figuren 1 und 2 zu implementieren und dementsprechend die Kondensatoren 5 in den Brückenmodulen 3 klein dimensionieren zu können, wird eine Art Zweipunkt-Regelansatz realisiert, der nachfolgend anhand der Zeitdiagramme der Figuren 3 bis 5 erläutert wird. Der Ausgangs-Wechselstrom $i_{ac}$ des Stromrichters soll mit einem gewünschten zeitlichen Amplitudenverlauf bereitgestellt werden, wobei üblicherweise ein sinusförmiger Amplitudenverlauf eines Wechselstroms gewünscht ist. Die Erfindung ist jedoch nicht auf sinusförmige Verläufe des Ausgangs-Wechselstroms beschränkt, vielmehr können auch andere Verläufe realisiert werden. Nachfolgend sei aber beispielhaft vom sinusförmigen Verlauf ausgegangen.

Ein solcher sinusförmiger oder zumindest angenähert sinusförmiger Verlauf des Ausgangs-Wechselstroms $i_{ac}$ ist in der Figur 3 erkennbar. Im Übrigen zeigen die Figuren 3 bis 5 dieselben Spannungen und Ströme des Stromrichters, nur mit unterschiedlichen zeitlichen Auflösungen. In der Figur 4 ist ein erster vergrößerter Zeitmaßstab im Vergleich zur Figur 3 verwendet, das heißt die Signale sind zeitlich feiner aufgelöst. In der Figur 5 ist die Ausgangsspannung $v_{ac}$ mit noch größerer zeitlicher Auflösung dargestellt. Dementsprechend zeigt die Figur 4 nur einen kleinen Zeitausschnitt und dementsprechend nur wenige Perioden der nahezu rechteckförmigen Amplitudenverläufe der Ausgangsspannung $v_{ac}$. Bei der weiteren Vergrößerung in Figur 5 ist insbesondere der Zeitverlauf bei einer ansteigenden Flanke der Ausgangsspannung $v_{ac}$ deutlicher erkennbar.

Die Figur 3 zeigt eine vollständige Periode der Ausgangs-Wechselspannung $v_{ac}$ und des Ausgangs-Wechselstroms $i_{ac}$, der wie erkennbar im Wesentlichen sinusförmig verläuft, jedoch mit einem gewissen Ripple. Die Brückenmodule 3 der Stromrichterzweige 1, 2 beziehungsweise deren Leistungshalbleiter 4 werden mit einer höheren Frequenz moduliert als die Ausgangsfrequenz der Ausgangs-Wechselspannung, was in der Figur 3 durch das höherfrequente im Wesentlichen rechteckförmige Signal der Spannung $v_{ac}$ erkennbar ist, das den sinusförmigen Verlauf des Ausgangs-Wechselstroms quasi umhüllt. Diese höherfrequente Ansteuerung erfolgt mit einer Modulationsfrequenz, die erheblich höher ist als die Ausgangsfrequenz, sodass durch die auf diese Weise erzeugten Spannungsimpulse der Ausgangs-Wechselstrom im Takt der Modulationsfrequenz wechselweise zu größeren und zu kleineren Werten hin beeinflusst wird, so dass sich im Mittel der gewünschte zeitliche Amplitudenverlauf des Ausgangs-Wechselstroms ergibt. Dies kann durch eine irgendwie geartete Beeinflussung eines Modulationsparameters der Modulations-Wechselspannung $v_{ac}$ erfolgen, zum Beispiel durch das Puls-Pausen-Verhältnis, das heißt im Sinne einer Pulsdauer-Modulation (PWM-Modulation). Soll der Ausgangs-Wechselstrom hin zu größeren Werten verändert werden, wird die Pulsdauer der Modulations-Wechselspannung erhöht, im umgekehrten Fall verringert.

In dem in den Figuren 3 bis 5 dargestellten Ausführungsbeispiel wird eine Modulations-Wechselspannung mit einer Amplitude des im Wesentlichen rechteckförmigen Signals erzeugt, die dem mit der Eingangsspannung $v_{dc}$ erreichbaren Maximalwert entspricht. Es werden somit immer alle in Reihe geschalteten Brückenmodule zugeschaltet und wieder abgeschaltet. Hierdurch entsteht ein maximaler Amplitudenhub bei der Modulations-Wechselspannung. Infolge dessen kann eine maximale Reduzierung der erforderlichen Kapazitäten, das heißt der Kondensatoren 5, in den Brückenmodulen 3 erreicht werden. Dazu muss weiter, wie unten beschrieben, der Kreisstrom in bestimmter Art geführt und geregelt werden. Im Sinne der Erfindung muss aber nicht der maximale Modulationshub bei der Modulations-Wechselspannung ausgenutzt werden. Es kann auch ein geringerer Modulationshub erzeugt werden, mit dem dennoch der zeitliche Amplitudenverlauf des Ausgangs-Wechselstroms in der gewünschten Weise beeinflusst werden kann, so dass der gewünschte zeitliche Amplitudenverlauf des Ausgangs-Wechselstroms entsteht.

Wie insbesondere in der Figur 5 erkennbar ist, ist es vorteilhaft, beim Erzeugen einer ansteigenden oder abfallenden Flanke der Modulations-Wechselspannung die in Reihe geschalteten Brückenmodule nicht gleichzeitig zu schalten, sondern kurz hintereinander. Hierdurch entsteht die in Figur 5 erkennbare treppenförmig ansteigende Flanke. Auf diese Weise wird die Energievariation in den Kondensatoren 5 auf den Leistungsanteil beschränkt, der durch die begrenzte Spannungsanstiegsflanke und -abfallflanke erzeugt ist.

Es ist vorteilhaft, den Kreisstrom $i_{cir}$ zu steuern, um die Ströme $i_{b,1}$ und $i_{b,2}$ in den Stromrichterzweigen 1, 2 niedrig zu halten, während die Zweigspannungen hoch sind, um die in den Stromrichterzweigen auftretenden Leistungen $p_{b,1}$ und $p_{b,2}$ zu minimieren, die verantwortlich für die Energievariation sind.

Die Figur 6 zeigt für den in der Figur 3 dargestellten Zeitbereich den Verlauf des Kreisstroms $i_{cir}$. Wie erkennbar ist, nimmt der Kreisstrom $i_{cir}$ zeitweise relativ große Werte an, was es ermöglicht, die Zweigströme $i_{b,1}$ und $i_{b,2}$ niedrig zu halten und damit die Energievariation zu minimieren.

Weiterhin ist es vorteilhaft, die Zweigströme so zu regeln, dass sie die während der Spannungsflanken aufgenommenen Energiemengen wieder zurückführen, während die Zweigspannungen hoch sind. Dazu ist ein geringer, negativer Zweigstrom erforderlich.

Die Zweigströme werden also so geführt, dass ihr Betrag im Wesentlichen dem des Ausgangsstroms $i_{ac}$ entspricht, wenn die Zweigspannungen niedrig sind, und nur ein geringer Zweigstrom zur Regelung der Zweigenergien ansteht, wenn die Zweigspannungen hoch sind.

Um die Ausgangs-Wechselspannung möglichst störungsfrei, das heißt oberwellenarm, zu erzeugen, ist es vorteilhaft, ausgangsseitig eine Last mit hoher Induktivität und/oder ein Ausgangsfilter vorzusehen, zum Beispiel ein Tiefpassfilter.

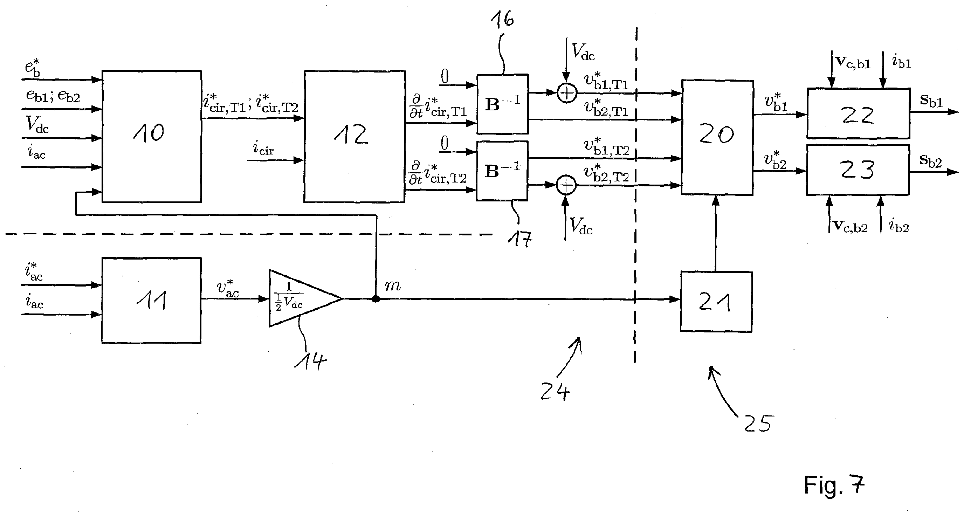

Die Figur 7 zeigt den Aufbau einer Steuerungseinrichtung zur Steuerung des Stromrichters gemäß Figur 1. Es werden dabei als Ausgangssignale Schaltsignale erzeugt, mit denen die Gate-Anschlüsse der Leistungshalbleiter 4 angesteuert werden. Die Steuerungseinrichtung weist einen Reglerteil 24 und einen Modulatorteil 25 auf. Der Reglerteil 24 weist einen Energieregler 10 für jeden Stromrichterzweig 1, 2 auf, ferner einen Ausgangsstromregler 11, einen Regler für den Kreisstrom 12, einen Verstärker 14, Summierglieder 18, 19 sowie Blöcke 16, 17, die nachfolgend noch näher beschrieben werden. Der Modulatorteil 25 weist eine Schalteinheit 20, einen PWM-Erzeuger 21 sowie Zweigmodulatoren 22, 23 auf. Über den Eingangsstromregler 12 und den Ausgangsstromregler 11 werden die Eingangs- und Ausgangsströme unabhängig voneinander geregelt. Die Länge eines Steuerzyklus des Ausgangsstroms ist abhängig von der Modulationsfrequenz beziehungsweise der entsprechenden Periodendauer des daraus erzeugten PWM-Signals. In diesem Sinne dient der PWM-Erzeuger 21 zur Steuerung und Synchronisation der Zweigmodulatoren 22, 23.

Der gemessene Ausgangsstrom $i_{ac}$ wird mittels des Ausgangsstromreglers 11, der als PI-Regler ausgebildet sein kann, in Bezug auf einen Referenzwert $i^*_{ac}$ geregelt. Der Ausgangswert des Ausgangsstromreglers 11 liefert einen Ausgangsspannungsreferenzwert $v^*_{ac}$. Dieser wird durch die gemessene Eingangsspannung $V_{dc}$ geteilt (Block 14), was zu einem Modulationsreferenzwert m führt. Die gesamte Zweigenergie der Stromrichterzweige 1, 2, gekennzeichnet durch die Größen $e_{b1}$ und $e_{b2}$, wird aus dem Vektor der gemessenen Spannungen der Kondensatoren 5 der Brückenmodule 3 bestimmt. Es handelt sich hierbei um die Summe der Energien, die in den Kondensatoren eines jeweiligen Stromrichterzweigs gespeichert sind. Diese Zweigenergien werden mittels des Energiereglers 10, der ebenfalls als PI-Regler ausgeführt sein kann, geregelt. Der Energieregler 10 regelt die jeweilige Zweigenergie in Bezug auf einen Zweigenergiereferenzwert $e^*_b$, der als konstanter Wert festgelegt sein kann und für einen jeweiligen Stromrichter gewählt werden kann. Der Energieregler 10 legt einen Referenzleistungswert für den jeweiligen Stromrichterzweig als $p^*_{b,1}$ beziehungsweise $p^*_{b,2}$ fest. Die Zweigleistung wird durch den Eingangsstromwert eingestellt. Wenn ein PWM-Impuls der Modulations-Wechselspannung im Stromrichterzweig 1 vorhanden ist (Zustand T1), wird ein Kreisstromreferenzwert $i^*_{cir,T1}$ aus dem Stromreferenzwert $i^*_{b1}$ des Stromrichterzweigs 1 und dem gemessenen Ausgangsstrom $i_{ac}$ gewonnen.

$$i^*_{\mathrm{cir,T1}} = i^*_{\mathrm{b1,T1}} - \frac{1}{2} \cdot i_{\mathrm{ac}} = \frac{p^*_{\mathrm{b1}}}{\left(1 - \frac{m+1}{2}\right) \cdot V_{\mathrm{dc}}} - \frac{1}{2} \cdot i_{\mathrm{ac}}$$

In entsprechender Weise wird der Kreisstromreferenzwert $i^*_{cir,T2}$ gewonnen aus dem Stromreferenzwert $i^*_{b2}$ des Stromrichterzweigs 2 und dem gemessenen Ausgangsstrom $i_{ac}$, wenn ein PWM-Impuls der Modulations-Wechselspannung im Stromrichterzweig 2 vorhanden ist (Zustand T2).

$$i^*_{\mathrm{cir,T2}} = i^*_{\mathrm{b2,T2}} + \frac{1}{2} \cdot i_{\mathrm{ac}} = \frac{p^*_{\mathrm{b2}}}{\frac{m+1}{2} \cdot \tilde{V}_{\mathrm{dc}}} + \frac{1}{2} \cdot i_{\mathrm{ac}}$$

Jeder Eingangsstromreferenzwert wird einem unabhängigen Teil des Eingangsstromreglers 12 zugeführt, der zum Beispiel als P-Regler ausgeführt sein kann. Die Ausgangsgrößen des Eingangsstromreglers 12 werden in den Blöcken 16, 17 jeweils separat unter Berücksichtigung einer weiteren Eingangsgröße mit der invertierten Zustandsraummatrix B multipliziert.

In dem Modulatorteil 25 wird zwischen zwei Gruppen von Zweigspannungsreferenzwerten umgeschaltet. Die Spannungen $v^*_{b1,T1}$ und $v^*_{b2,T1}$ werden während eines positiven Spannungspulses im Stromrichterzweig 1 verwendet (Zustand T1), daher wird in diesem Fall der gemessene Eingangsspannungswert $V_{dc}$ zu dem Wert $v^*_{b1,T1}$ addiert. Die Spannungen $v^*_{b1,T2}$ und $v^*_{b2,T2}$ werden während des positiven Spannungspulses im Stromrichterzweig 2 genutzt (Zustand T2), daher wird der gemessene Eingangsspannungswert in diesem Fall zu $v^*_{b2,T2}$ addiert.

Der Modulatorteil 25 selektiert über den Schalter 20 die jeweilige Kombination der Zweigspannungsreferenzwerte $v^*_{b1}$ und $v^*_{b2}$ entsprechend dem augenblicklich gültigen Zustand T1 oder T2. Die Auswahl des Zustands T1 oder T2 erfolgt im Modulatorteil 21 entsprechend dem Modulationsreferenzwert m mittels einer Dreieck-Träger-Pulsdauermodulation. Die selektierten Werte werden dann in den separaten Zweigmodulatoren 22, 23 zu den Ansteuersignalen $s_{b1}$ und $s_{b2}$ moduliert.

Die Abtastfrequenz des Ausgangsstromreglers 11, des Verstärkers 14 und/oder des PWM-Erzeugers 21 kann dabei bedeutend niedriger gewählt werden als die der übrigen zuvor erläuterten Blöcke der Steuerungseinrichtung, insbesondere der Regelungs- und/oder Modulatorblöcke, nämlich beispielsweise entsprechend der einfachen oder doppelten Modulationsfrequenz, die in Fig. 3 anhand der Modulations-Wechselspannung erkennbar ist. Demgegenüber kann die Abtastfrequenz einiger oder aller der übrigen zuvor erläuterten Blöcke der Steuerungseinrichtung, insbesondere der Regelungs- und/oder Modulatorblöcke wesentlich höher sein als die Modulationsfrequenz, um eine hohe Regelgüte des Kreisstroms zu erreichen. Die Anzahl der Schalthandlungen kann dabei auf die in einem Stromrichterzweig in Serie geschalteten Brückenmodule 3 verteilt werden, so dass die Auswirkungen auf die Schaltverluste gering bleiben.

**Patentansprüche**

1. Verfahren zum Betrieb eines modularen Multilevel-Stromrichters, der mehrere Stromrichterzweige (1, 2) aufweist, in denen jeweils Reihenschaltungen von Brückenmodulen (3) angeordnet sind, wobei die Brückenmodule (3) jeweils eine Brückenschaltung in Form einer Halbbrücke oder einer Vollbrücke aus Leistungshalbleitern (4) und wenigstens einen über die Brückenschaltung schaltbaren Kondensator (5) aufweisen, wobei durch das Verfahren an einer Ausgangsseite (9) des Stromrichters eine Ausgangs-Wechselspannung ($v_{ac}$) mit einer Ausgangsfrequenz bereitgestellt wird, **dadurch gekennzeichnet, dass** der gewünschte zeitliche Amplitudenverlauf der Ausgangs-Wechselspannung ($v_{ac}$) des Stromrichters mittels ZweipunktRegelung, bei der immer alle in Reihe geschalteten Brückenmodule (3) eines jeweiligen Stromrichterzweigs (1,2) zugeschaltet und wieder abgeschaltet werden, durch eine durch die Brückenmodule (3) von einem oder mehreren Stromrichterzweigen (1, 2) erzeugte Modulations-Wechselspannung mit einer Modulationsfrequenz synthetisiert wird, die höher ist als die Ausgangsfrequenz, wobei die Modulations-Wechselspannung im Takt der Modulationsfrequenz die Ausgangs-Wechselspannung ($v_{ac}$) wechselnd über- und unterschreitet, und durch jeweils einen einem Stromrichterzweig (1, 2) zugeordneten Energieregler (10) die Schaltzeitpunkte der Leistungshalbleiter (4) der Brückenmodule (3) dieses Stromrichterzweigs (1, 2) mit dem Regelziel einer Minimierung der Energievariation des Stromrichterzweigs (1, 2) durch Erzeugung und Regelung eines Kreisstroms ($i_{cir}$) im Stromrichter geregelt werden.

2. Verfahren nach dem vorhergehenden Anspruch, **dadurch gekennzeichnet, dass** ein Ausgleich des Energieinhalts in einem Stromrichterzweig (1, 2) innerhalb einer Periode der Modulations-Wechselspannung durch Erzeugung des Kreisstroms ($i_{cir}$) durchgeführt wird.

3. Verfahren nach einem der vorhergehenden Ansprüche, **dadurch gekennzeichnet, dass** der gewünschte zeitliche Amplitudenverlauf der Ausgangs-Wechselspannung ($v_{ac}$) des Stromrichters durch Pulsdauermodulation der Modulations-Wechselspannung erzeugt wird.

4. Verfahren nach einem der vorhergehenden Ansprüche, **dadurch gekennzeichnet, dass** die Modulations-Wechselspannung rechteckförmig oder steilflankig trapez- oder treppenförmig erzeugt wird.

5. Verfahren nach einem der vorhergehenden Ansprüche, **dadurch gekennzeichnet, dass** der Ausgangsstrom ($i_{ac}$) des Stromrichters unabhängig vom Kreisstrom ($i_{cir}$) gesteuert und/oder geregelt wird.

6. Modularer Multilevel-Stromrichter, der mehrere Stromrichterzweige (1, 2) aufweist, in denen jeweils Reihenschaltungen von Brückenmodulen (3) angeordnet sind, wobei die Brückenmodule (3) jeweils eine Brückenschaltung in Form einer Halbbrücke oder einer Vollbrücke aus Leistungshalbleitern (4) und wenigstens einen über die Brückenschaltung schaltbaren Kondensator (5) aufweisen, und mit wenigstens einer Steuerungseinrichtung (24, 25), die zur Durchführung eines Verfahrens nach einem der vorhergehenden Ansprüche eingerichtet ist.

7. Stromrichter nach dem vorhergehenden Anspruch, **dadurch gekennzeichnet, dass** die Steuerungseinrichtung (24, 25) einen Ausgangsstromregler (11) aufweist, der zur Regelung des Ausgangsstroms ($i_{ac}$) des Stromrichters eingerichtet ist.

8. Stromrichter nach einem der Ansprüche 6 bis 7, **dadurch gekennzeichnet, dass** die Steuerungseinrichtung (24, 25) einen Kreisstromregler (12) aufweist, der zur Erzeugung und Regelung des Kreisstroms ($i_{cir}$) im Stromrichter eingerichtet ist.

9. Stromrichter nach dem vorhergehenden Anspruch, **dadurch gekennzeichnet, dass** der Kreisstromregler (12) dem Energieinhaltsregler (10) nachgeordnet ist.

10. Stromrichter nach einem der Ansprüche 6 bis 9, **dadurch gekennzeichnet, dass** die Steuerungseinrichtung (24, 25) wenigstens zwei unterschiedliche Abtastfrequenzen aufweist, mit denen verschiedene Teile der Steuerungseinrichtung (24, 25) betrieben sind.

11. Computerprogramm mit Programmcodemitteln, eingerichtet zur Durchführung eines Verfahrens zum Betrieb eines modularen Multilevel-Stromrichters, der mehrere Stromrichterzweige (1, 2) aufweist, in denen jeweils Reihenschaltungen von Brückenmodulen (3) angeordnet sind, wobei die Brückenmodule (3) jeweils eine Brückenschaltung in Form einer Halbbrücke oder einer Vollbrücke aus Leistungshalbleitern (4) und wenigstens einen über die Brückenschaltung schaltbaren Kondensator (5) aufweisen, wobei durch das Verfahren an einer Ausgangsseite (9) des Stromrichters eine Ausgangs-Wechselspannung ($v_{ac}$) mit einer Ausgangsfrequenz bereitgestellt wird, wobei der gewünschte zeitliche Amplitudenverlauf der Ausgangs-Wechselspannung ($v_{ac}$) des Stromrichters mittels Zweipunkt-Regelung, bei der immer alle in Reihe geschalteten Brückenmodule (3) eines jeweiligen Stromrichterzweigs (1,2) zugeschaltet und wieder abgeschaltet werden, durch eine durch die Brückenmodule (3) von einem oder mehreren Stromrichterzweigen (1, 2) erzeugte Modulations-Wechselspannung mit einer Modulationsfrequenz synthetisiert wird, die höher ist als die Ausgangsfrequenz, wobei die Modulations-Wechselspannung im Takt der Modulationsfrequenz die Ausgangs-Wechselspannung ($v_{ac}$) wechselnd über- und unterschreitet, und durch jeweils einen einem Stromrichterzweig (1, 2) zugeordneten Energieregler (10) die Schaltzeitpunkte der Leistungshalbleiter (4) der Brückenmodule (3) dieses Stromrichterzweigs (1, 2) mit dem Regelziel einer Minimierung der Energievariation des Stromrichterzweigs (1, 2) durch Erzeugung und Regelung eines Kreisstroms ($i_{cir}$) im Stromrichter geregelt werden, wenn das Computerprogramm auf einem Rechner ausgeführt wird.

**Claims**

1. Method for operating a modular multilevel converter which has a plurality of converter branches (1, 2) in each of which series circuits of bridge modules (3) are arranged, the bridge modules (3) each having a bridge circuit in the form of a half-bridge or a full bridge composed of power semiconductors (4) and at least one capacitor (5) which can be switched via the bridge circuit, the method providing an output AC voltage ($v_{ac}$) with an output frequency at an output side (9) of the converter, **characterized in that** the desired temporal amplitude profile of the output AC voltage ($v_{ac}$) of the converter is set by means of two-point control, in which all series-connected bridge modules (3) of a respective converter branch (1,2) are always switched on and switched off again, is synthesized by a modulation AC voltage generated by the bridge modules (3) of one or more converter branches (1, 2) at a modulation frequency which is higher than the output frequency, the modulation AC voltage alternately exceeding and falling below the output AC voltage ($v_{ac}$) in time with the modulation frequency, and the switching times of the power semiconductors (4) of the bridge modules (3) of a converter branch (1, 2) are controlled by means of an energy controller (10) assigned to each converter branch (1, 2) with the control objective of minimizing the energy variation of the converter branch (1, 2) by generating and controlling a circular current ($i_{cir}$) in the converter.

2. Method according to the preceding claim, **characterized in that** an equalization of the energy content in a converter branch (1, 2) is performed within one period of the modulation AC voltage by generating the circular current ($i_{cir}$).

3. Method according to one of the preceding claims, **characterized in that** the desired temporal amplitude characteristic of the output AC voltage ($v_{ac}$) of the converter is generated by pulsewidth modulation of the modulation AC voltage.

4. Method according to any of the preceding claims, **characterized in that** the modulation AC voltage is generated in a rectangular or steep-flanked trapezoidal or staircase shape.

5. Method according to any of the preceding claims, **characterized in that** the output current ($i_{ac}$) of the converter is controlled and/or regulated independently of the circular current ($i_{cir}$).

6. Modular multilevel converter which has a plurality of converter branches (1, 2) in each of which series circuits of bridge modules (3) are arranged, the bridge modules (3) each having a bridge circuit in the form of a half-bridge or a full bridge composed of power semiconductors (4) and at least one capacitor (5) which can be switched via the bridge circuit, and having at least one control device (24, 25) which is set up to carry out a method according to one of the preceding claims.

7. A power converter according to the preceding claim, **characterized in that** the control device (24, 25) comprises an output current controller (11) arranged to control the output current (iac) of the power converter.

8. A converter according to any one of claims 6 to 7, **characterized in that** the control device (24, 25) comprises a circular current controller (12) arranged to generate and control the circular current ($i_{cir}$) in the converter.

9. A power converter according to the preceding claim, **characterized in that** the circular current controller (12) is arranged downstream of the energy content controller (10).

10. A power converter according to any one of claims 6 to 9, **characterized in that** the control device (24, 25) has at least two different sampling frequencies at which different parts of the control device (24, 25) are operated.

11. Computer program with program code means, set up for carrying out a method for operating a modular multilevel converter which has a plurality of converter branches (1, 2) in each of which series circuits of bridge modules (3) are arranged, the bridge modules (3) each having a bridge circuit in the form of a half-bridge or a full bridge of power semiconductors (4) and at least one capacitor (5) which can be switched via the bridge circuit, wherein an output AC voltage ($v_{ac}$) with an output frequency is provided at an output side (9) of the converter by means of the method, wherein the desired temporal amplitude characteristic of the output AC voltage ($v_{ac}$) of the converter is determined by means of two-point control, in which all series-connected bridge modules (3) of a respective converter branch (1,2) are always switched on and switched off again, is synthesized by a modulation AC voltage generated by the bridge modules (3) of one or more converter branches (1, 2) at a modulation frequency which is higher than the output frequency, the modulation AC voltage alternately exceeding and falling below the output AC voltage ($v_{ac}$) in time with the modulation frequency, and the switching times of the power semiconductors (4) of the bridge modules (3) of a converter branch (1, 2) are controlled by an energy controller (10) associated with each converter branch (1, 2) with the control objective of minimizing the energy variation of the converter branch (1, 2) by generating and controlling a circular current ($i_{cir}$) in the converter when the computer program is executed on a computer.

**Revendications**

1. Procédé pour faire fonctionner un convertisseur modulaire multi-niveaux qui comporte plusieurs branches de convertisseur (1, 2) dans chacune desquelles sont disposés des circuits série de modules en pont (3), les modules en pont (3) comportant chacun un circuit en pont sous la forme d'un demi-pont ou d'un pont complet de semi-conducteurs de puissance (4) et au moins un condensateur (5) qui peut être commuté par l'intermédiaire du circuit en pont, le procédé permettant de fournir une tension alternative de sortie ($v_{ac}$) avec une fréquence de sortie sur un côté sortie (9) du convertisseur,
**caractérisé en ce que**
l'évolution temporelle souhaitée de l'amplitude de la tension alternative de sortie ($v_{ac}$) du convertisseur est synthétisée par une tension alternative de modulation qui est générée par les modules en pont (3) d'une ou de plusieurs branches de convertisseur (1, 2), à une fréquence de modulation supérieure à la fréquence de sortie, au moyen d'une régulation à deux points dans laquelle toujours tous les modules en pont (3) d'une branche de convertisseur respective (1, 2) montés en série sont mis en circuit et recoupés,
la tension alternative de modulation passant alternativement en dessus et en dessous de la tension alternative de sortie ($v_{ac}$) selon le rythme de la fréquence de modulation, et
les instants de commutation des semi-conducteurs de puissance (4) des modules en pont (3) de cette branche de convertisseur (1, 2) sont régulés par un régulateur d'énergie respectif (10) associé à une branche de convertisseur (1, 2), avec pour objectif de minimiser la variation d'énergie de la branche de convertisseur (1, 2) en générant et en régulant un courant électrique circulaire ($i_{cir}$) dans le convertisseur.

2. Procédé selon la revendication précédente,
**caractérisé en ce qu'**un équilibrage du contenu énergétique dans une branche de convertisseur (1, 2) est effectué au sein d'une période de la tension alternative de modulation en générant le courant électrique circulaire ($i_{cir}$).

3. Procédé selon l'une des revendications précédentes,
**caractérisé en ce que** l'évolution temporelle souhaitée de l'amplitude de la tension alternative de sortie ($v_{ac}$) du convertisseur est générée par modulation de la durée d'impulsion de la tension alternative de modulation.

4. Procédé selon l'une des revendications précédentes,
**caractérisé en ce que** la tension alternative de modulation est générée en forme rectangulaire ou en forme de trapèze ou d'escalier à flancs raides.

5. Procédé selon l'une des revendications précédentes,
**caractérisé en ce que** le courant de sortie ($i_{ac}$) du convertisseur est commandé et/ou régulé indépendamment du courant électrique circulaire ($i_{cir}$).

**6.** Convertisseur modulaire multi-niveaux comportant plusieurs branches de convertisseur (1, 2) dans chacune desquelles sont disposés des circuits série de modules en pont (3), les modules en pont (3) comportant chacun un circuit en pont sous la forme d'un demi-pont ou d'un pont complet de semi-conducteurs de puissance (4) et au moins un condensateur (5) qui peut être commuté par l'intermédiaire du circuit en pont, et comportant au moins un dispositif de commande (24, 25) qui est conçu pour mettre en œuvre un procédé selon l'une des revendications précédentes.

**7.** Convertisseur selon la revendication précédente,
**caractérisé en ce que** le dispositif de commande (24, 25) comprend un régulateur de courant de sortie (11) qui est conçu pour réguler le courant de sortie ($i_{ac}$) du convertisseur.

**8.** Convertisseur selon l'une des revendications 6 à 7,
**caractérisé en ce que** le dispositif de commande (24, 25) comprend un régulateur de courant circulaire (12) qui est conçu pour générer et réguler le courant électrique circulaire ($i_{cir}$) dans le convertisseur.

**9.** Convertisseur selon la revendication précédente,
**caractérisé en ce que** le régulateur de courant circulaire (12) est disposé en aval du régulateur de contenu énergétique (10).

**10.** Convertisseur selon l'une des revendications 6 à 9,
**caractérisé en ce que** le dispositif de commande (24, 25) présente au moins deux fréquences d'échantillonnage différentes auxquelles sont exploitées différentes parties du dispositif de commande (24, 25).

**11.** Programme d'ordinateur comprenant des moyens de code de programme, qui, lorsque le programme d'ordinateur est exécuté sur un ordinateur, est conçu pour faire fonctionner un convertisseur modulaire multi-niveaux qui comporte plusieurs branches de convertisseur (1, 2) dans chacune desquelles sont disposés des circuits série de modules en pont (3), les modules en pont (3) comportant chacun un circuit en pont sous la forme d'un demi-pont ou d'un pont complet de semi-conducteurs de puissance (4) et au moins un condensateur (5) qui peut être commuté par l'intermédiaire du circuit en pont, le procédé permettant de fournir une tension alternative de sortie ($v_{ac}$) avec une fréquence de sortie sur un côté sortie (9) du convertisseur,
dans lequel l'évolution temporelle souhaitée de l'amplitude de la tension alternative de sortie ($v_{ac}$) du convertisseur est synthétisée par une tension alternative de modulation qui est générée par les modules en pont (3) d'une ou de plusieurs branches de convertisseur (1, 2), à une fréquence de modulation supérieure à la fréquence de sortie, au moyen d'une régulation à deux points dans laquelle toujours tous les modules en pont (3) d'une branche de convertisseur respective (1, 2) montés en série sont mis en circuit et recoupés,
la tension alternative de modulation passant alternativement en dessus et en dessous de la tension alternative de sortie ($v_{ac}$) selon le rythme de la fréquence de modulation, et
les instants de commutation des semi-conducteurs de puissance (4) des modules en pont (3) de cette branche de convertisseur (1, 2) sont régulés au moyen d'un régulateur d'énergie respectif (10) associé à une branche de convertisseur (1, 2), avec pour objectif de minimiser la variation d'énergie de la branche de convertisseur (1, 2) en générant et en régulant un courant électrique circulaire ($i_{cir}$) dans le convertisseur.

Fig. 1

Fig. 2

Fig. 3

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- DE 102008014898 A1

**In der Beschreibung aufgeführte Nicht-Patentliteratur**

- Low output frequency operation of the modular multi-level converter. *2010 IEEE Energy Conversion Congress and Exposition (ECCE),* September 2010, 3993-3997
- Direct modular multi-level converter for gearless low-speed drives. *Proceedings of the 2011-14th European Conference on Power Electronics and Applications (EPE 2011),* August 2011, 1-7
- Control of the modular multilevel cascade converter based on triple-star bridge-cells (mmcc-tsbc) for motor drives. *2012 IEEE Energy Conversion Congress and Exposition (ECCE),* September 2012, 3506-3513
- The Multilevel Modular DC Converter. *IEEE TRANSACTIONS ON POWER ELECTRONICS,* Oktober 2013, vol. 28 (10
- Energy balancing of the modular multilevel matrix converter based on a new transformed arm power analysis. *2014 16th European Conference on Power Electronics and Applications (EPE'14-ECCE Europe,* August 2014, 1-10
- Quasi Two-Level Operation of Modular Multi-level Converter for Use in a High-Power DC Transformer With DC Fault Isolation Capability. *IEEE TRANSACTIONS ON POWER ELECTRONICS,* Januar 2015, vol. 30 (1